# EUROPEAN PATENT APPLICATION

(11) **EP 4 675 586 A1**
(43) Date of publication of application: **07.01.2026**
(21) Application number: 24764203.6
(22) Date of filing: 28.02.2024
(51) Int. Cl.: G08B 17/12, H04N 7/18, H04N 23/61, H04N 23/695, G06V 10/26, G06V 10/44

(54) **SHIP SAFETY CONTROL METHOD AND SYSTEM**

(30) Priority: 28.02.2023 KR 20230027280
(71) Applicant: HD Korea Shipbuilding & Offshore Engineering Co., Ltd., Seongnam-si, Gyeonggi-do 13553 (KR); Hyundai Heavy Industries Co., Ltd., Ulsan 44032 (KR); HD Hyundai Samho Co., Ltd., Jeollanam-do 58462 (KR)
(72) Inventor: KIM, Han Sol, Seongnam-si, Gyeonggi-do 13553 (KR); CHOI, Tae Sik, Ulsan 44032 (KR); KIM, Jae Eun, Ulsan 44032 (KR)
(74) Representative: AWA Sweden AB
(86) International application number: PCT/KR2024/002595
(87) International publication number: WO 2024/181804

(57) **Abstract**

The present disclosure relates to a ship safety control method and ship safety control system. According to an embodiment of the present disclosure, the ship safety control method may include determining a sea condition in an area, in which a ship is located, based on a video feature of a first video of a ship situation, preprocessing the first video based on the sea condition, designating a control area in a second video based on the second video generated through the preprocessing, and detecting at least one of an object and occurrence of an event within the control area.

## Description

### Technical Field

The present disclosure relates to a ship safety control method and system.

### Background Art

Recently, with the automation of ships, the number of crew members on ships is decreasing and the size of ships is increasing.

This creates a problem in that it becomes difficult to respond quickly to various accidents that occur on ships. For example, fires on container ships cause $20 billion in damage every year.

Conventional ship control systems have a disadvantage of making it difficult to grasp information related to ship operation, such as crew and ships' operational states, in real time. For example, in a case where surveillance is conducted using an imaging device, even when an event is detected, it is difficult to immediately display an area in which the event occurs and come up with immediate response measures. However, since most ship accidents occur at sea, a delayed response may cause even greater damage.

Accordingly, there is a need to develop a system capable of efficiently recognizing accidents that occur during ship operation and responding quickly.

### Disclosure of Invention

### Technical Problem

The present disclosure provides ship safety control method and system. The problems to be solved by the present invention are not limited to the problems mentioned above, and other problems and advantages of the present invention that are not mentioned may be understood through the following description and will be more clearly understood through embodiments of the present invention. In addition, it will be appreciated that the matters and advantages to be addressed by the present invention may be realized by the means and combinations thereof defined by the claims.

### Solution to Problem

As a technical means for solving the technical problem described above, a first aspect of the present disclosure provides a ship safety control method including determining a sea condition in an area, in which a ship is located, based on a video feature of a first video of a ship situation, preprocessing the first video based on the sea condition, designating a control area in a second video based on the second video generated through the preprocessing, and detecting at least one of an object and occurrence of an event within the control area.

A second aspect of the present disclosure provides a ship safety control device including at least one memory and at least one processor, wherein the at least one processor is configured to
determine a sea condition in an area, in which a ship is located, based on a video feature of a first video of a ship situation, preprocess the first video based on the sea condition, designate a control area in a second video based on the second video generated through the preprocessing, and detect at least one of an object and occurrence of an event within the control area.

A third aspect of the present disclosure provides a computer-readable recording medium having recorded thereon a program for causing a computer to execute the method according to the first aspect.

Apart from those above, other methods and systems for implementing the present invention and computer-readable recording media storing computer programs for executing the methods may be further provided.

Other aspects, features, and advantages than those described above will be clear from the accompanying drawings, the claims, and the detailed description of the invention.

### Advantageous Effects of Invention

According to the problem solving means of the present disclosure described above, the present disclosure may enable stable ship control to be performed in response to situations, such as sea fog and rain, which occur during ship operation.

Moreover, the present disclosure enables efficient ship control based on various scenarios for event occurrence detection.

Furthermore, the present disclosure enables immediate response to an accident by providing and performing a response measure based on a result of detecting an object or event occurrence.

### Brief Description of Drawings

FIG. 1 is a conceptual diagram illustrating a ship safety control system according to an embodiment.
FIG. 2 is a block diagram of a ship safety control device according to an embodiment.
FIG. 3 is an example configuration diagram of a system including a ship safety control device and an external device, according to an embodiment.
FIG. 4 is a flowchart of a ship safety control method according to an embodiment.
FIG. 5 is a flowchart of a method of detecting an object and an event occurrence based on a first video acquired through an imaging device and performing a response measure, according to an embodiment.
FIG. 6 is an example drawing illustrating a preprocessing method in a sea-fog situation, according to an embodiment.
FIG. 7 is a flowchart of a preprocessing method in a sea-fog situation, according to an embodiment.
FIG. 8 is an example drawing illustrating a preprocessing method in a rainy situation, according to an embodiment.
FIG. 9 is a flowchart of a preprocessing method in a rainy situation, according to an embodiment.
FIG. 10 is an example drawing illustrating a method of dividing an area, according to an embodiment.
FIG. 11 is an example drawing illustrating a method of maintaining a user-designated area when a shooting zone of an imaging device is changed, according to an embodiment.
FIG. 12 is an example diagram illustrating a method of detecting a fire event, according to an embodiment.
FIG. 13 is an example diagram illustrating a method of detecting a fall event, according to an embodiment.
FIG. 14 is an example diagram illustrating a method of detecting an event of not wearing safety equipment, according to an embodiment.
FIG. 15 is an example diagram illustrating a method of detecting an event involved in an increase in moving speed, according to an embodiment.
FIG. 16 is an example diagram illustrating a method of detecting an event involved in cluster occurrence, according to an embodiment.
FIG. 17 is an example diagram illustrating a method of detecting an event involved in an intrusion into a danger area, according to an embodiment.
FIG. 18 is an example diagram illustrating a method for detecting an event of falling into the sea, according to an embodiment.
FIG. 19 is an example drawing illustrating a selective control method according to an embodiment.

### Best Mode for Carrying Out the Invention

A ship safety control method may include determining a sea condition in an area, in which a ship is located, based on a video feature of a first video of a ship situation, preprocessing the first video based on the sea condition, designating a control area in a second video based on the second video generated through the preprocessing, and detecting at least one of an object and occurrence of an event within the control area.

### Mode for the Invention

The advantages and features of the present invention and the methods for achieving them will become clear with reference to the embodiments described in detail together with the accompanying drawings. However, the present invention is not limited to the embodiments presented below but may be implemented in various modes, and it is to be appreciated that all changes, equivalents, and substitutes that do not depart from the spirit and technical scope of the present invention are encompassed in the embodiments. The embodiments presented below are provided so that this disclosure will be complete and will fully convey the scope of the invention to one of ordinary skill in the art to which the present invention pertains. In the description of the present invention, certain detailed explanations of the related art are omitted when it is deemed that they may unnecessarily obscure the gist of the present invention.

The terms used herein are merely used to describe particular embodiments and are not intended to limit the present invention. An expression used in the singular encompasses the expression of the plural unless it has a clearly different meaning in the context. In this application, it is to be understood that terms, such as "including," "comprising," and "having" are intended to indicate the existence of features, numbers, steps, actions, components, parts, or combinations thereof disclosed in the specification and are not intended to preclude the possibility that one or more other features, numbers, steps, actions, components, parts, or combinations thereof may exist or may be added.

Some embodiments of the present disclosure may be described in terms of functional block components and various processing steps. Some or all of these functional blocks may be implemented by any number of hardware and/or software components configured to perform specific functions. For example, the functional blocks of the present disclosure may be implemented using one or more microprocessors or circuits for a given function. Also, for example, the functional blocks of the present disclosure may be implemented in various programming or scripting languages. The functional blocks may be implemented with algorithms that run on one or more processors. The present disclosure may also employ conventional techniques for electronic configuration, signal processing, and/or data processing. The terms "mechanism," "element," "unit," and "configuration" may be used in a broad sense and are not limited to mechanical and physical configurations.

Also, connection lines or connection members between the components illustrated in the drawings are merely illustrative of functional connections and/or physical or circuit connections. In actual devices, connections between the components may be represented by functional connections, physical connections, or circuit connections that may be replaced or added.

Hereinafter, the present disclosure will be described in detail with reference to the accompanying drawings.

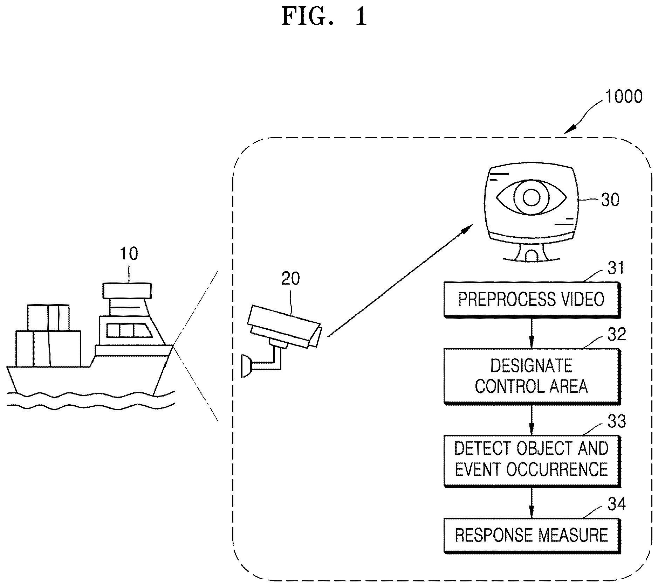

FIG. 1 is a conceptual diagram illustrating a ship safety control system according to an embodiment.

Referring to FIG. 1, a ship 10 may quickly detect accidents occurring on the ship 10 based on a ship safety control system 1000 and immediately perform appropriate response measures according to a result of the detection.

For example, the ship safety control system 1000 may include an imaging device 20 and a ship safety control device 30.

The imaging device 20 may be installed on the deck of the ship 10, inside the ship 10, in a yard, in a shipyard, etc., and may thus capture an area to be monitored by the ship safety control device 30. For example, the imaging device 20 may include, but not limited to, a pan, tilt, and zoom (PTZ) camera, a closed-circuit television (CCTV) device, and an image sensor.

The ship safety control device 30 may detect events occurring in multiple areas based on a video received from at least one imaging device 20.

Conventionally, when control is performed during ship operation, accidents occurring inside a ship are mainly detected and responded to. However, the ship safety control device 30 may efficiently detect and respond to accidents, such as an object falling into the sea and a fire, which occur outside a ship, based on a number of imaging devices 20 installed not only inside the ship but also outside the ship, such as on the deck.

The ship safety control device 30 may detect an event occurring in the ship 10 by using a number of sensors in addition to the imaging device 20. For example, the ship safety control device 30 may detect an event occurring in the ship 10 by using at least one of a fire detection sensor, a gas concentration sensor, and an integrated ship system (ISS).

The ship safety control device 30 may perform (31) preprocessing on a first video received from the imaging device 20. For example, the ship 10 may encounter various situations, such as rain, sea fog, night, and fire.

For example, when the first video received from the imaging device 20 has a picture quality that makes it difficult to detect an object and occurrence of an event, the ship safety control device 30 may perform (31) preprocessing on the first video to generate a second video suitable for detecting the object and the occurrence of an event.

The ship safety control device 30 may (32) designate a control area for detecting an object and occurrence of an event, based on the second video generated through the preprocessing process.

For example, the ship safety control device 30 may (32) designate an area designated by a crew member as the control area. When there is no area designated by a crew member, the ship safety control device 30 may separate a sea area from an area of the ship 10 in the second video and (32) designate the area of the ship 10 as the control area.

The ship safety control device 30 may (33) detect an object based on the designated control area.

For example, the ship safety control device 30 may detect at least one of a person, safety equipment, fire, smoke, and a container within the control area. Embodiments are not limited thereto.

For example, the ship safety control device 30 may recognize an object based on an object recognition model. Here, the object recognition model may correspond to a deep convolutional neural network (DCNN)-based object recognition model. For example, DCNN-based object recognition models may include, but not limited to, a region-based CNN (R-CNN), a vision transformer (ViT), a fast/faster R-CNN, a region-based fully convolutional network (RFCN), a single-shot detector (SSD), and you only look once (YOLO).

For example, the YOLO object recognition model may process an object by extracting a feature map from video data through a backbone, neck, and head, refining and reconstructing the feature map, localizing the extracted feature map, predicting a class and an object region, and generating feature maps having multiple sizes for multi-scale prediction.

The ship safety control device 30 may output and display the location coordinates of the detected object. For example, a crew member may efficiently respond to an accident based on the location coordinates of an object displayed on the ship safety control device 30.

The ship safety control device 30 may output class information of the detected object. For example, when multiple persons are detected in the control area, the ship safety control device 30 may assign a number to each person. The ship safety control device 30 may display a number assigned to a person who is not wearing safety equipment among the detected multiple persons.

The ship safety control device 30 may (33) detect the occurrence of an event based on the designated control area.

For example, an event may include, but not limited to, at least one of a fire, a person falling, a worker not wearing safety equipment, a crowding event, an intrusion into a danger area, and drowning.

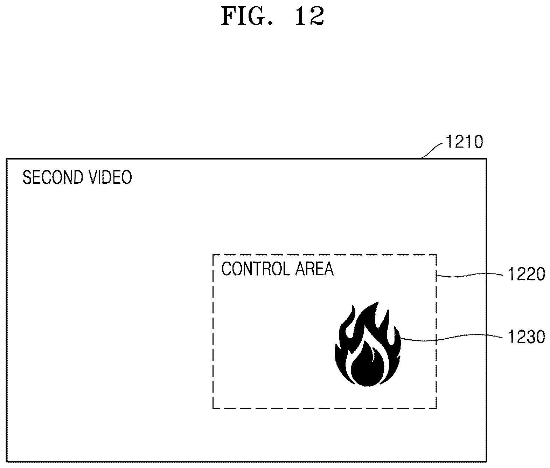

Hereinafter, a method of (33) detecting, by the ship safety control device 30, the occurrence of an event is described in detail below with reference to FIGS. 12 to 18.

The ship safety control device 30 may perform a response measure 34 based on a result of detecting at least one of an object and the occurrence of an event.

For example, when a fire is detected on the ship 10, the ship safety control device 30 may automatically perform response measures to extinguish the fire. In the past, in order to extinguish a fire on the ship 10, there was a case where a crew member who recognized a fire detection result directly extinguished the fire. However, the ship safety control device 30 may perform immediate fire suppression through rapid fire detection.

The ship safety control device 30 may provide an evacuation route for crew members on the ship 10 to evacuate. For example, the ship safety control device 30 may designate an evacuation route in advance for the evacuation of crew members and then operate lighting so that the crew members may recognize the evacuation route in the event of an accident.

Although not shown in FIG. 1, the ship safety control device 30 may generate and provide an event occurrence log based on the type and number of previously detected events. Through this, a crew member may recognize events that frequently occur on the ship 10 and establish response measures in advance.

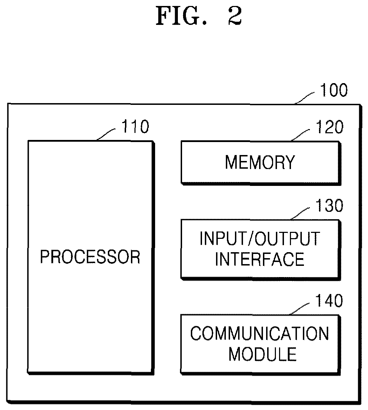

FIG. 2 is a block diagram of a ship safety control device according to an embodiment.

Referring to FIG. 2, a ship safety control device 100 may include a processor 110, a memory 120, an input/output interface 130, and a communication module 140. For convenience of descriptions, only components related to the present invention are illustrated in FIG. 2. Therefore, in addition to the components illustrated in FIG. 2, other general-purpose components may be further included in the ship safety control device 100. It is obvious to one of ordinary skill in the art related to the present invention that the processor 110, the memory 120, the input/output interface 130, and the communication module 140 illustrated in FIG. 2 may be implemented as independent devices.

Here, the ship safety control device 100 may be the same device as the ship safety control device 30 in FIG. 1.

The processor 110 may process a command of a computer program by performing basic arithmetic, logic, and input/output operations. Here, a command may be provided from the memory 120 or an external device. The processor 110 may generally control operations of other components included in the ship safety control device 100.

For example, the processor 110 may preprocess a first video received from an imaging device and generate a second video suitable for detecting an object and the occurrence of an event.

The processor 110 may designate a control area based on the preprocessed second video. Here, the control area may be designated not only arbitrarily but also through an image segmentation technology.

The processor 110 may detect at least one of an object and the occurrence of an event within the control area. For example, a detected object may include at least one of a person, safety equipment, fire, smoke, and a container. A detected event may include at least one of a fire, a person falling, a worker not wearing safety equipment, a crowding event, an intrusion into a danger area, and drowning.

The processor 110 may perform a response measure based on a detection result.

For example, the processor 110 may detect at least one of an object and event occurrence by using a neural network model. For example, the ship safety control device 100 may train a neural network model by using, as input data of the neural network model, a first video captured by an imaging device that captures a ship situation and, as output data, a result of detecting at least one of an object and event occurrence. The ship safety control device 100 may input a first video, which is captured by an imaging device that captures a ship situation, to a trained neural network model and may obtain a result of detecting at least one of an object and event occurrence.

In machine learning technology and cognitive science, a neural network model refers to a statistical learning algorithm implemented based on the structure of a biological neural network or a structure that executes the algorithm.

For example, a neural network model may represent a model having problem-solving capabilities by learning to reduce the error between a correct output corresponding to a specific input and an inferred output while nodes, i.e., artificial neurons that form a network by combining synapses as in a biological neural network, are repeatedly adjusting weights for synapses. For example, a neural network model may include a neural network model or any probability model, which is used in an artificial intelligence learning method, such as machine learning or deep learning.

For example, a neural network model may be implemented as a multilayer perceptron (MLP), which consists of multiple layers of nodes and connections therebetween. A neural network model according to an embodiment may be implemented using one of various artificial neural network model structures including the MLP. For example, a neural network model may be composed of an input layer that receives an input signal or data from the outside, an output layer that outputs an output signal or data corresponding to the input data, and at least one hidden layer, which is located between the input layer and the output layer, receives a signal from the input layer, extracts a feature, and transmits the feature to the output layer. The output layer receives a signal or data from the hidden layer and outputs the signal or data to the outside.

The processor 110 may be implemented as an array of a plurality of logic gates or as a combination of a general-purpose microprocessor and a memory storing a program that may be executed by the microprocessor. For example, the processor 110 may include a general-purpose processor, a central processing unit (CPU), a microprocessor, a digital signal processor (DSP), a controller, a microcontroller, a state machine, or the like. In some environments, the processor 110 may include an application-specific integrated circuit (ASIC), a programmable logic device (PLD), a field programmable gate array (FPGA), or the like. For example, the processor 110 may refer to a combination of processing devices, such as a combination of a DSP and a microprocessor, a combination of multiple microprocessors, a combination of one or more microprocessors coupled with a DSP core, or a combination of any other such components.

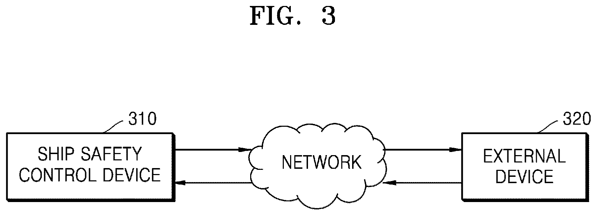

The memory 120 may include any non-transitory computer-readable recording medium. For example, the memory 120 may include a permanent mass storage device, such as random access memory (RAM), read-only memory (ROM), a disk drive, a solid-state drive (SSD), or flash memory. As another example, a permanent mass storage device, such as ROM, SSD, flash memory, or a disk drive, may be a separate permanent storage device distinct from memory. The memory 120 may store an operating system (OS) and at least one piece of program code (e.g., code for the processor 110 to perform an operation to be described below with reference to FIGS. 3 to 19).

These software components may be loaded from a computer-readable recording medium separate from the memory 120. Such a separate computer-readable recording medium may be a recording medium that may be directly connected to the ship safety control device 100 and may include, for example, an input/output computer-readable recording medium, such as a floppy drive, a disk, tape, a digital versatile disc (DVD)/compact disc (CD)-ROM drive, or a memory card. Alternatively, the software components may be loaded to the memory 120 via the communication module 140 rather than a computer-readable recording medium. For example, at least one program may be loaded to the memory 120 based on a computer program (e.g., a computer program for the processor 110 to perform an operation described below with reference to FIGS. 3 to 15), wherein the computer program is installed through files provided by developers or a file distribution system, which distributes an installation file of an application, through the communication module 140.

The input/output interface 130 may be a means for interfacing with a device (e.g., a keyboard or a mouse) for input and/or output, wherein the device may be connected to the ship safety control device 100 or included in the ship safety control device 100. Although it is illustrate in FIG. 2 that the input/output interface 130 is an element configured separately from the processor 110, but the input/output interface 130 is not limited thereto and may be configured to be included in the processor 110. For example, the processor 110 may designate, as a control area, a user-designated area that is input based on the input/output interface 130.

The communication module 140 may provide a configuration or function enabling the ship safety control device 100 to communicate with an external device (not shown) through a network. The communication module 140 may provide a configuration or function for the ship safety control device 100 to communicate with other external devices. For example, a control signal, a command, data, etc. provided under control by the processor 110 may be transmitted to an external device via the communication module 140 and a network.

Although not shown in FIG. 2, the ship safety control device 100 may further include a display module. For example, the ship safety control device 100 may display a second video showing an event detection result through the display module.

FIG. 3 is an example configuration diagram of a system including a ship safety control device and an external device, according to an embodiment.

Referring to FIG. 3, a ship safety control device 310 may include any type of server that manages a web and/or application capable of providing artificial intelligence services. The ship safety control device 310 in FIG. 3 may be the same device as the ship safety control device 30 in FIG. 1 and/or the ship safety control device 100 of FIG. 2.

An external device 320 refers to a subject that provides the ship safety control device 310 with information necessary for the ship safety control device 310 to detect an object and the occurrence of an event and perform a response measure. The external device 320 may include any type of server that manages various types of information. The external device 320 may include a database and may include, but not limited to, a server that manages a web service API that may provide information. For example, the external device 320 may correspond to an imaging device that photographs a ship situation and provides a video. The external device 320 may correspond to a database in which response measures according to detected events are stored.

The ship safety control device 310 and the external device 320 may communicate with each other and/or with other devices through a network. The network is a comprehensive data communication network that allows different entities to smoothly communicate with each other, and may include the wired Internet, the wireless Internet, and a mobile wireless communication network. For example, the network may include a local area network (LAN), a wide area network (WAN), a value added network (VAN), a mobile radio communication network, a satellite communication network, and a combination thereof. For example, wireless communication may include, but not limited to, wireless LAN (Wi-Fi), Bluetooth, Bluetooth low energy, ZigBee, Wi-Fi direct (WFD), ultrawideband (UWB), infrared communication (infrared data association (IrDA)), near field communication (NFC), etc.

The ship safety control device 310 may communicate with the external device 320 via the network. The ship safety control device 310 may receive data from the external device 320 by performing communication through the network and provide a response based on the received data.

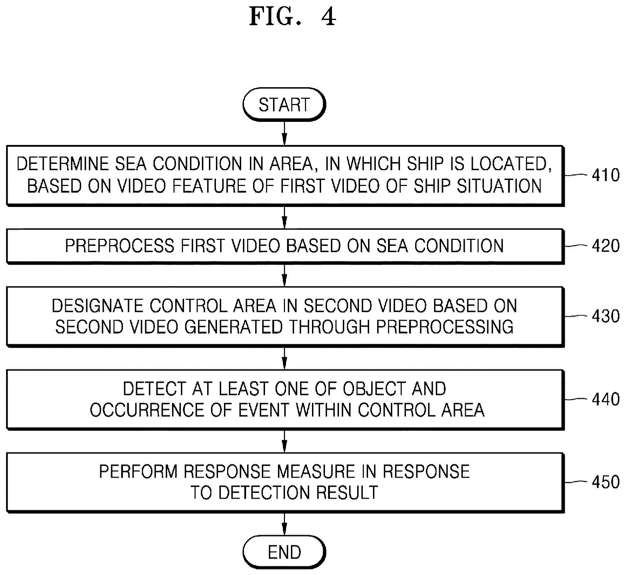

FIG. 4 is a flowchart of a ship safety control method according to an embodiment.

Referring to FIG. 4, the ship safety control method is composed of operations that are time-sequentially processed by the ship safety control device 100 and/or processor 110 in FIG. 2. Therefore, even when descriptions are omitted below, the descriptions given above about the ship safety control device 100 or the processor 110 in FIG. 2 may also be applied to the ship safety control method of FIG. 4.

A ship safety control device may determine a sea condition in an area, in which a ship is located, based on a video feature of a first video of a ship situation in operation 410.

The ship safety control device may calculate a video feature based on the first video obtained from an imaging device. Here, the video feature may include at least one feature among an illuminance feature, an RGB feature, and a dark channel feature.

The ship safety control device may determine the sea condition in the area where the ship is located, based on the calculated video feature. For example, when the calculated video feature exceeds a certain threshold value, the ship safety control device may determine that the sea condition in the area where the ship is located corresponds to at least one of night, rain, and sea fog.

The ship safety control device may preprocess the first video based on the determined sea condition in operation 420.

For example, the ship safety control device may perform at least one of night preprocessing, rain preprocessing, and sea-fog preprocessing based on the determined sea condition. The ship safety control device may generate a second video by preprocessing the first video.

The ship safety control device may designate a control area in the second video, based on the second video generated through the preprocessing in operation 430. For example, the ship safety control device may designate, as the control area, a designated area input by a user or determine the control area by analyzing the second video. For example, the ship safety control device may divide the second video into a sea area and a ship area and designate only the ship area as the control area.

The ship safety control device may detect at least one of an object and the occurrence of an event within the control area in operation 440.

For example, the ship safety control device may detect at least one object among a person, safety equipment, fire, smoke, and a container. The ship safety control device may detect at least one event among fire, a person falling, a worker not wearing safety equipment, a crowding event, an intrusion into a danger area, and drowning.

The ship safety control device may detect an object and the occurrence of an event, based on data obtained from at least one sensor among a fire detection sensor, a gas concentration sensor, and a ship recognition sensor, in addition to a video.

The ship safety control device may perform a response measure in response to a detection result in operation 450.

For example, the response measure may include, but not limited to, at least one of suppressing a fire, generating an alarm, marking an event area, expanding an event area, and marking an evacuation route.

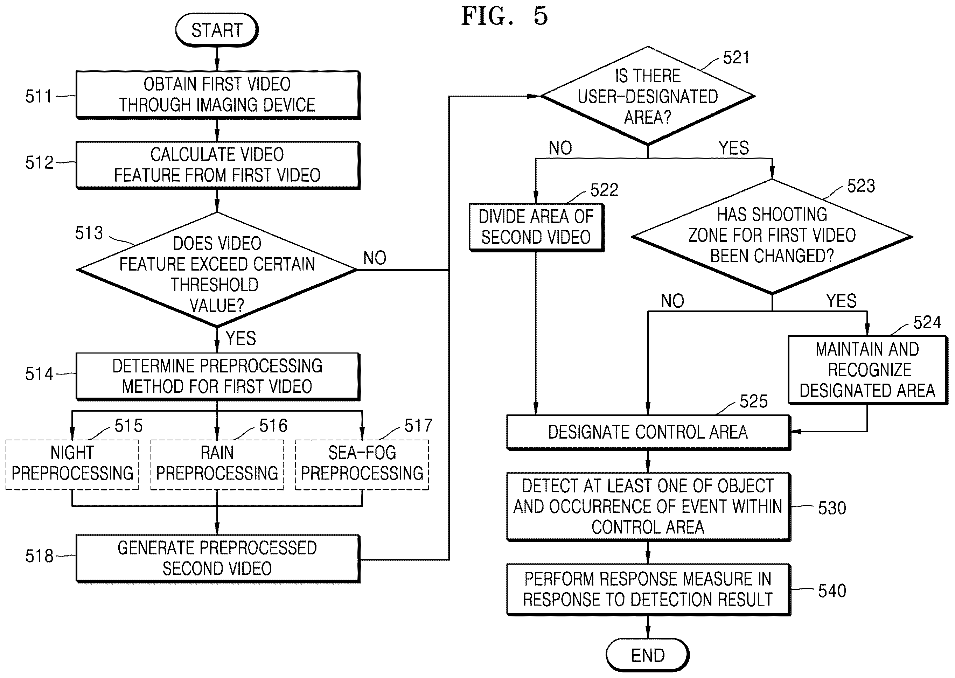

FIG. 5 is a flowchart of a method of detecting an object and an event occurrence based on a first video acquired through an imaging device and performing a response measure, according to an embodiment.

Referring to FIG. 5, a ship safety control method is composed of operations that are time-sequentially processed by the ship safety control device 100 and/or the processor 110 in FIG. 2. Therefore, even when descriptions are omitted below, the descriptions given above about the ship safety control device 100 or the processor 110 in FIG. 2 may also be applied to the ship safety control method of FIG. 5.

A ship safety control device may obtain a first video from the imaging device in operation 511.

Here, the first video refers to an original video captured by the imaging device. However, since a ship may encounter various conditions, such as rain and sea fog, during operation, preprocessing of the original video is necessary to obtain an accurate detection result.

The ship safety control device may calculate a video feature from the first video in operation 512.

For example, the video feature may include at least one of an illuminance feature, an RGB feature, and a dark channel feature. The video feature may be used to determine whether the ship safety control device performs a preprocessing process on the first video.

The ship safety control device may determine whether the video feature calculated from the first video exceeds a certain threshold value in operation 513.

For example, the ship safety control device may determine whether the value of an illuminance feature exceeds a first threshold value. The ship safety control device may also determine whether the value of an RGB feature exceeds a second threshold value. The ship safety control device may also determine whether the value of a dark channel feature exceeds a third threshold value.

When none of the features included in the video feature exceed a certain threshold value, the ship safety control device may determine whether there is a user-designated area in the first video, without performing preprocessing on the first video, in operation 521.

When at least one feature among the features included in the video feature exceeds a certain threshold value, the ship safety control device may determine a preprocessing method for the first video in operation 514.

The ship safety control device may perform at least one preprocessing process among night preprocessing 515, rain preprocessing 516, and sea-fog preprocessing 517.

For example, when the value of the illuminance feature exceeds the first threshold value, the ship safety control device may perform a night preprocessing process. When the value of the RGB feature exceeds the second threshold value, the ship safety control device may perform a rain preprocessing process. When the value of the dark channel feature exceeds the third threshold value, the ship safety control device may perform a sea-fog preprocessing process.

For example, when the value of the illuminance feature is less than 0.1 lux, the ship safety control device may perform the night preprocessing process. The ship safety control device may generate a video having improved visibility as a result of the night preprocessing process.

For example, the ship safety control device may use a night vision technology as the night preprocessing process. For example, the night vision technology refers to controlling the imaging device so that an infrared cut film applied to the imaging device is removed. Accordingly, the ship safety control device may generate a second video having improved visibility.

The ship safety control device may perform multiple preprocessing processes on the first video when each of multiple features included in the video feature exceeds a certain threshold value.

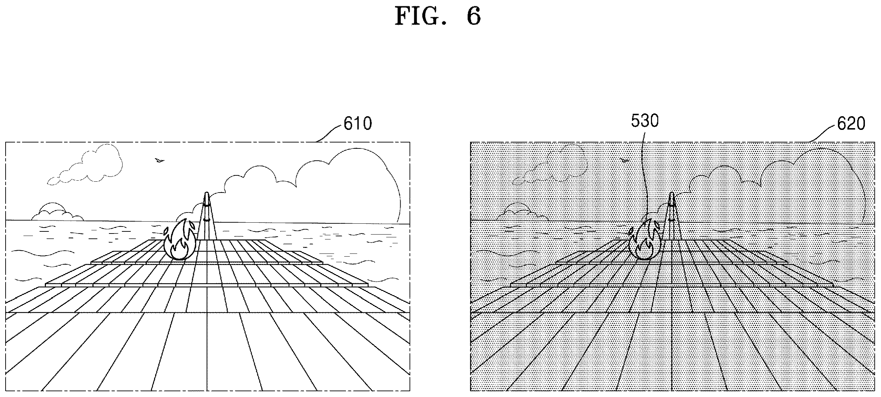

Each of the preprocessing processes (515, 516, and 517) of the first video is described in detail below with reference to FIGS. 6 to 9.

The ship safety control device may perform preprocessing according to the method determined for the first video in operation 518. The ship safety control device may generate a second video by performing preprocessing on the first video.

The ship safety control device may determine whether there is a user-designated area in the second video in operation 521.

When the user-designated area does not exist in the second video, the ship safety control device may divide the area of the second video in operation 522. For example, the ship safety control device may divide the area of the second video into a sea area and a ship area.

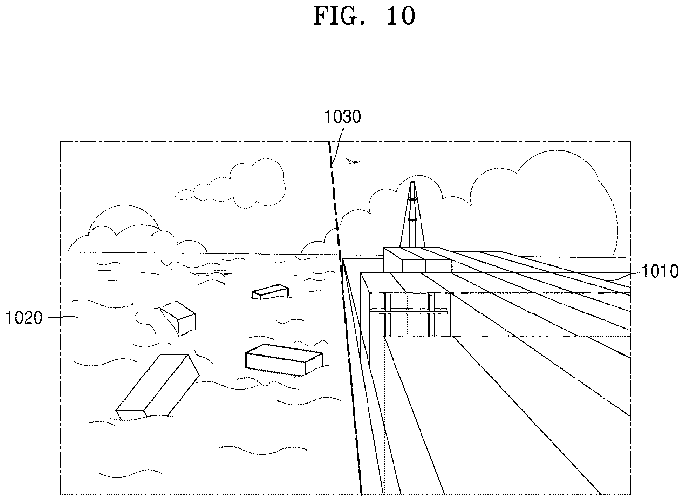

A method of dividing the area is described in detail below with reference to FIG. 10.

The ship safety control device may designate a control area in the second video in operation 525. For example, the ship safety control device may designate at least one of the sea area and the ship area as the control area.

When a user-designated area exists within the second video, the ship safety control device may determine whether a shooting zone for the first video and/or the position of the imaging device has changed in operation 523. For example, when the shooting zone for the first video and/or the position of the imaging device changes, the location of the user-designated area in the first video also changes, so it is necessary to maintain and recognize the user-designated area according to the change in the shooting zone.

When the shooting zone for the first video and/or the position of the imaging device has not changed compared to the previous one, the ship safety control device may designate the user-designated area as the control area in operation 525.

When the shooting zone for the first video and/or the position of the imaging device has changed compared to the previous one, the ship safety control device may adjust the user-designated area to reflect the changed shooting zone and/or the position of the imaging device in operation 524.

When the shooting zone of the imaging device has changed, a region where the user-designated area is located in the first video may change. The ship safety control device may maintain an area of observation and detection by adjusting the user-designated area according to the change in the location of the user-designated area in the first video.

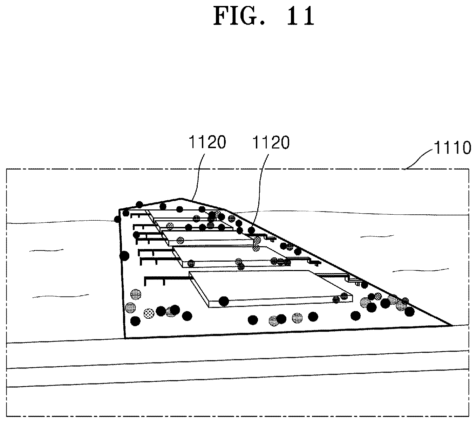

A method of maintaining and recognizing the user-designated area according to the change of the shooting zone is described in detail below with reference to FIG. 11.

The ship safety control device may designate, as the control area, a user-designated area newly recognized according to the change of the shooting zone for the first video and/or the position of the imaging device in operation 525.

The ship safety control device may detect at least one of an object and the occurrence of an event in the control area in operation 530. For example, the ship safety control device may detect at least one object among a person, safety equipment, fire, smoke, and a container. The ship safety control device may detect at least one event among fire, a person falling, a worker not wearing safety equipment, a crowding event, an intrusion into a danger area, and drowning.

The ship safety control device may perform a response measure according to at least one detection result among an object and the occurrence of an event in operation 540.

For example, the response measure may include, but not limited to, at least one of suppressing a fire, generating an alarm, marking an event area, expanding an event area, and marking an evacuation route.

FIG. 6 is an example drawing illustrating a preprocessing method in a sea-fog situation, according to an embodiment.

Referring to FIG. 6, an image 610 corresponds to an image captured by an imaging device in a situation where sea fog is not detected. An image 620 corresponds to an image captured by the imaging device in a situation where sea fog is detected.

According to the related art, the value of a structural similarity index measure (SSIM) is used to determine whether sea fog is detected. The SSIM is an index used to measure the quality of an image or a video and is used to compare the similarity between two different images or videos. However, there is a problem in that the value of the SSIM is difficult to use for general sea-fog situations because a control group of images in which no sea fog is detected is necessarily required.

However, the ship safety control device according to the present invention may determine a sea-fog situation in the first video obtained from the imaging device, without using a comparative image. The ship safety control device according to the present invention may calculate a dark channel feature to determine a sea-fog situation from the first video.

For example, the ship safety control device may calculate the brightness values of RGB channels for each frame of the first video. The ship safety control device may determine a channel having the minimum brightness value among the brightness values of the RGB channels. The ship safety control device may calculate the average brightness value of pixels in the first video with respect to a determined channel. The ship safety control device may determine the average brightness value as the dark channel feature value.

For example, the ship safety control device may perform a sea-fog preprocessing process when the value of the dark channel feature exceeds a certain threshold value.

According to an embodiment, the certain threshold value may be determined based on a dark channel feature value of each frame of the first video and/or an average brightness value of the pixels of each of the RGB channels of each frame.

According to an embodiment, the certain threshold value may be set to the difference between the average values of the brightness values among the RGB channels. For example, the ship safety control device may perform a sea-fog preprocessing process when the brightness values of all the RGB channels do not exceed the certain threshold value.

In an embodiment, the certain threshold value may be determined by using a characteristic that the brightness value of at least one channel among the RGB channels of the first video captured in a sea environment without the presence of sea fog tends to be very low compared to the brightness values of the other channels.

According to an embodiment, the certain threshold value may be determined based on background conditions including the amount of sunlight. In this case, when the amount of sunlight measured through the first video has a higher value than the average amount of sunlight, the ship safety control device may adjust the certain threshold value to a higher value than before.

The ship safety control device may perform a sea-fog preprocessing process on the image 620 in which the value of the dark channel feature exceeds the certain threshold value. The ship safety control device may include a process of sharpening an image. For example, the ship safety control device may perform a preprocessing process to sharpen the first video by using a dehaze algorithm. Accordingly, the brightness value of at least one channel among the RGB channels of the preprocessed second video may tend to be very low compared to the brightness values of the other channels.

Whether the brightness value of at least one channel among the RGB channels of a video tends to be very low compared to the brightness values of the other channels may be determined using, as references, a video with sea fog and a video without sea fog. According to an embodiment, Whether the brightness value of at least one channel among the RGB channels of a video tends to be very low compared to the brightness values of the other channels may be determined according to a reference value input by a user or a reference value extracted from the first video that has been obtained.

The ship safety control device may shorten a time taken for the sea-fog preprocessing process by additionally performing a process of optimizing the dehaze algorithm. For example, the ship safety control device may perform a filtering process after performing a process of compressing an original image in which sea fog has been detected. The ship safety control device may perform a process of restoring the compressed image after the filtering process is performed.

For example, the ship safety control device may accurately detect the occurrence of an event, such as a fire 630, based on the second video on which the sea-fog preprocessing process has been performed.

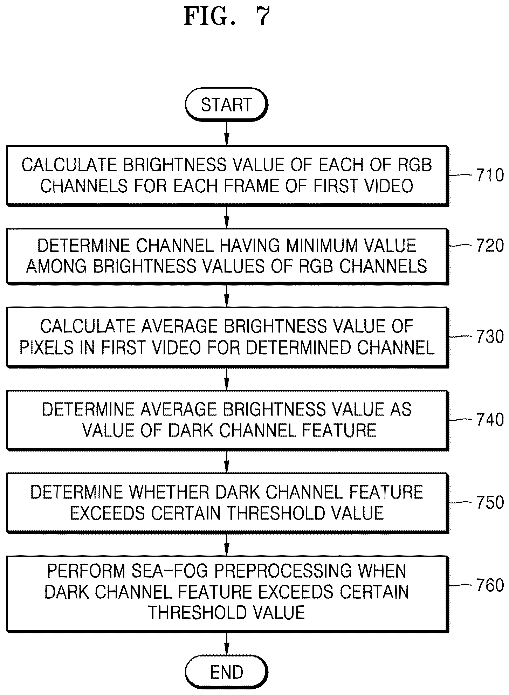

FIG. 7 is a flowchart of a preprocessing method in a sea-fog situation, according to an embodiment.

The ship safety control device may calculate the brightness value of each of RGB channels for each frame of the first video in operation 710.

The ship safety control device may determine a channel having the minimum brightness value among the brightness values of the RGB channels in operation 720.

The ship safety control device may calculate an average brightness value of pixels in the first video for the determined channel in operation 730.

The ship safety control device may determine the average brightness value as a dark channel feature value in operation 740.

The ship safety control device may determine whether the dark channel feature exceeds a certain threshold value in operation 750.

Here, the certain threshold value may be determined based on the dark channel feature value of each frame of the first video and/or the average brightness value of pixels of each of the RGB channels of each frame.

The certain threshold value may be determined by using the fact that, in the absence of sea fog, the brightness value of at least one channel among the RGB channels tends to be very low compared to the brightness values of the other channels.

The certain threshold value may be determined based on background conditions. For example, the background conditions may include the amount of sunlight. When the measured amount of sunlight has a higher value than the average amount of sunlight, the ship safety control device may adjust the certain threshold value to a higher value than before.

When the dark channel feature exceeds the certain threshold value, the ship safety control device may perform sea-fog preprocessing in operation 760. For example, the ship safety control device may perform a sea-fog preprocessing process based on a dehaze algorithm. Accordingly, the ship safety control device may reduce the difference between pixel values of the first video, thereby creating the second video that is clear.

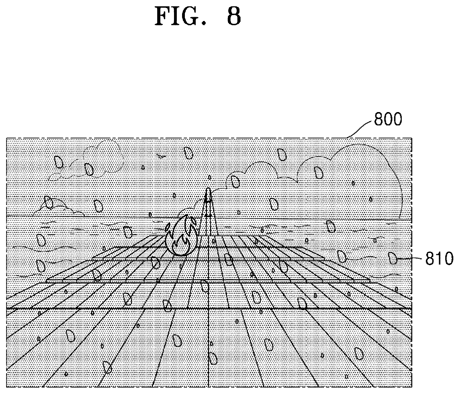

FIG. 8 is an example drawing illustrating a preprocessing method in a rainy situation, according to an embodiment.

Referring to FIG. 8, an image 800 corresponds to the first video captured by an imaging device in a rainy situation.

A ship safety control device may calculate an RGB feature based on the first video obtained from the imaging device.

For example, the ship safety control device may calculate the brightness value of each pixel included in a frame of the first video. The ship safety control device may calculate the brightness value of each pixel included in a frame adjacent to the frame for which the brightness value has been calculated. The ship safety control device may calculate the variation in the brightness value of each pixel. The ship safety control device may determine, as the value of the RGB feature, the number of pixels for which the variation in the brightness value exceeds a certain threshold value.

The ship safety control device may determine, as the value of the RGB feature, the sum of the variations in the brightness values of respective pixels.

The ship safety control device may determine that it is a rainy situation when the calculated value of the RGB feature exceeds a certain threshold value. In this case, the ship safety control device may perform a rain preprocessing process on the first video.

According to an embodiment, the certain threshold value may be a ratio of an RGB feature value to the total number of pixels in a frame.

According to an embodiment, the certain threshold value may be determined based on the average brightness value of the RGB channels of each frame of the first video.

According to an embodiment, the certain threshold value may be determined by using a characteristic that the variation in the average brightness value of the RGB channels of a video shot in a non-rainy sea environment is greater than the variation in the average brightness value of the RGB channels of a video shot in a rainy sea environment.

According to an embodiment, the certain threshold value may be determined based on background conditions including the amount of sunlight. In this case, when the amount of sunlight measured through the first video has a higher value than the average amount of sunlight, the ship safety control device may adjust the certain threshold value to a higher value than before.

The ship safety control device may perform rain preprocessing by restoring pixels corresponding to a part covered by a water droplet 810 in a video by using the RGB values of pixels included in an adjacent frame. Pixels, for which the variation in the average brightness value of RGB channels is relatively low compared to the other parts, may be detected and recognized as a part covered by the water droplet 810, color information of pixels included in a part not covered by the water droplet 810 may be inversely calculated while an image (or a frame) is being compressed and restored, and color information of the pixels included in the part covered by the water droplet 810 may be corrected using the calculated color information. The compression and restoration may be performed once or multiple times. A region not covered by the water droplet 810 may be determined using pixels having the relatively great variation in the average brightness value of the RGB channels compared to the other region.

Whether a pixel has a relatively high or low value of the variation in the average brightness value of the RGB channels compared to the other part may be determined using a reference value or may be determined by a ratio between values sorted in a frame. For example, the reference value may be determined based on a reference image or video in a rainy situation. For example, the variation in the average brightness value of the RGB channels may be calculated for each pixel, and pixels having values within the upper or lower 5 % of the value of all pixels may be determined as pixels having relatively high or low values.

For example, the ship safety control device may use a discrete cosine transform (DCT) algorithm that compresses a video and an inverse DCT algorithm that restores the video so as to restore a part covered by the water droplet 810 in the video.

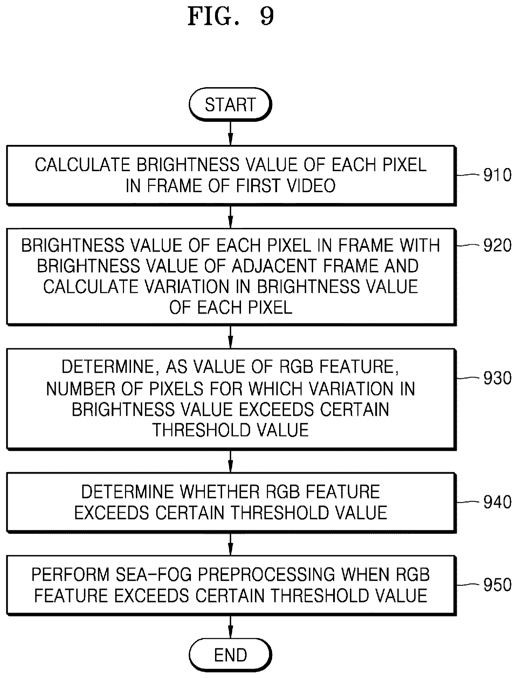

FIG. 9 is a flowchart of a preprocessing method in a rainy situation, according to an embodiment.

A ship safety control device may calculate the brightness value of each pixel included in a frame of the first video in operation 910.

The ship safety control device may compare the brightness value of each pixel of the frame with the brightness value of an adjacent frame and may calculate the variation in the brightness value of each pixel in operation 920.

The ship safety control device may determine, as the value of an RGB feature, the number of pixels for which the variation in the brightness value exceeds a certain threshold value in operation 930.

Here, the value of the RGB feature refers to the difference in the RGB value of each pixel between adjacent frames.

The ship safety control device may also determine, as the value of the RGB feature, a ratio of pixels, for which the variation in the brightness value exceeds the certain threshold value, to all pixels in the frame.

The ship safety control device may also calculate the value of the RGB feature by normalizing the number of pixels, for which the variation in the brightness value exceeds the certain threshold value, and a ratio of the pixels, for which the variation in the brightness value exceeds the certain threshold value, to all pixels in the frame.

The ship safety control device may determine whether the determined RGB feature exceeds a certain threshold value in operation 940.

Here, the certain threshold value may be a ratio of the RGB feature value to the total number of pixels included in the frame.

The ship safety control device may perform rain preprocessing when the RGB feature exceeds the certain threshold value in operation 950. For example, the ship safety control device may perform a preprocessing process in a rainy situation, based on a DCT algorithm and an inverse DCT algorithm.

For example, the ship safety control device may compress the first video by using the DCT algorithm. Thereafter, the ship safety control device may restore pixels in a region recognized as a water droplet by using the RGB values of adjacent pixels in the process of restoring the compressed first video through the inverse DCT algorithm.

FIG. 10 is an example drawing illustrating a method of dividing an area, according to an embodiment.

Referring to FIG. 10, a video shot by an imaging device may include a ship area 1010 and a sea area 1020.

A ship safety control device may use an image segmentation model to designate a control area. The image segmentation model is a method of segmenting an image at a pixel level and is used to identify and separate an object or an area within an image.

For example, the image segmentation model may segment the second video into pixels and determine which of the sea area 1020 and the ship area 1010 each pixel corresponds to. The image segmentation model may determine the criteria for distinguishing pixels based on previously learned information.

The ship safety control device may generate a virtual line 1030 connecting pixels corresponding to a part where the sea area 1020 and the ship area 1010 are connected. For example, the ship safety control device may designate at least one of the sea area 1020 and the ship area 1010 as the control area, based on the virtual line 1030.

For example, when an object that has been detected in the ship area 1010 is detected in the sea area 1020 after a certain time elapses since the object moves to the sea area 1020, the ship safety control device may determine that a person has fallen into the sea.

FIG. 11 is an example drawing illustrating a method of maintaining a user-designated area when a shooting zone of an imaging device is changed, according to an embodiment.

Referring to FIG. 11, a shooting zone 1110 of the imaging device may include a user-designated area 1120 for safety control. For example, a user may arbitrarily set the user-designated area 1120 for safety control in advance through an input/output interface included in a ship safety control device.

For example, when the shooting zone 1110 of the imaging device changes due to vibration of a ship or control of the imaging device, it is necessary to maintain the user-designated area 1120 in order to detect the occurrence of an event in an area designated by a user in advance.

The ship safety control device may extract a feature point 1121 from the user-designated area 1120 and maintain the user-designated area 1120.

For example, the ship safety control device may extract, as the feature point 1121, a part at which the value of a pixel rapidly changes in the user-designated area 1120. The ship safety control device may extract the feature point 1121 in the user-designated area 1120 by using a Features from Accelerated Segment Test (FAST) algorithm and an Oriented FAST and Rotated BRIEF (ORB) algorithm.

When the shooting zone 1110 changes, the ship safety control device may recognize and maintain the user-designated area 1120 by tracking the extracted feature point 1121. Since tracking of the feature point 1121 is based on frame continuity, the user-designated area 1120 may be accurately maintained and recognized.

For example, the ship safety control device may estimate a homography matrix representing the transition relationship between an initial shooting zone and a changed shooting zone, based on the feature point 1121 that has been tracked. The ship safety control device may maintain and recognize the user-designated area 1120 by calculating a changed zone according to the estimated homography matrix.

When a moving object is detected in the user-designated area 1120 except for the feature point 1121, the ship safety control device may mask the moving object, thereby improving the accuracy of recognition of the user-designated area 1120.

FIG. 12 is an example diagram illustrating a method of detecting a fire event, according to an embodiment.

Referring to FIG. 12, a ship safety control device may detect a fire 1230 or smoke in a control area 1220 designated within a preprocessed second video 1210 by using an object detection algorithm.

For example, the ship safety control device may determine that a fire event has occurred when the fire 1230 or smoke is detected in the control area 1220. However, when the ship safety control device erroneously detects the fire 1230, i.e., when a fire event is immediately determined to have occurred, the accuracy of fire recognition may be reduced.

The ship safety control device may determine that a fire event has occurred when the number of times the fire 1230 or smoke is detected within a certain time period is at least a certain threshold value.

For example, the ship safety control device may detect the fire 1230 or smoke every two seconds. The ship safety control device may determine that a fire event has occurred when the fire 1230 or smoke is detected four or more times within a time period of 20 seconds.

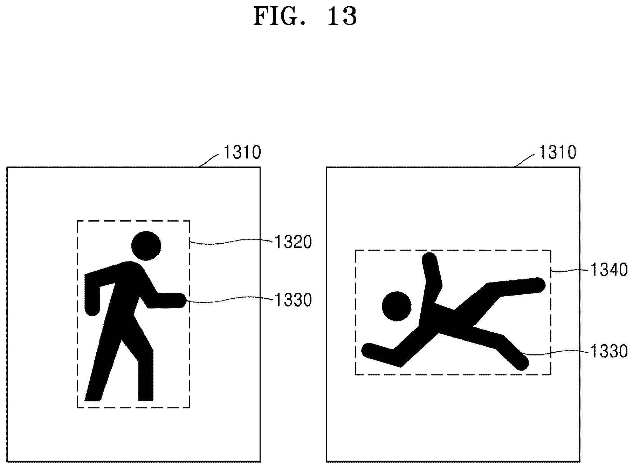

FIG. 13 is an example diagram illustrating a method of detecting a fall event, according to an embodiment.

Referring to FIG. 13, a ship safety control device may detect a person 1330 falling in a control area 1310.

The ship safety control device may determine a bounding box for the person 1330. Here, the bounding box means the smallest rectangle that includes the person 1330.

The ship safety control device may calculate the aspect ratio of the bounding box. For example, in a normal situation, the horizontal length of a bounding box 1320 for the person 1330 is less than the vertical length thereof. In this case, the ratio of the height to the width of the bounding box 1320 may exceed 1.

However, when the person 1330 falls or stumbles, the horizontal length of a bounding box 1340 for the person 1330 is greater than the vertical length thereof. In such cases, the ratio of the height to the width of the bounding box 1340 may be less than 1.

The ship safety control device may determine that a fall event has occurred when a time for which the ratio of the height to the width of a bounding box is less than 1 is at least a certain threshold value for a certain time period.

For example, the ship safety control device may determine that a fall event has occurred when a time for which the ratio of the height to the width of a bounding box is less than 1 is at least 5 seconds within a time period of 30 seconds.

In addition, the ship safety control device may recognize a rescue signaling movement as well as the fall of the person 1330, based on a human pose estimation algorithm. For example, the human pose estimation algorithm may estimate a pose based on the joint positions of the person 1330. When the estimated pose of the person 1330 corresponds to the pose of a rescue signaling movement stored in the algorithm, the ship safety control device may determine that the person 1330 is sending a rescue signal.

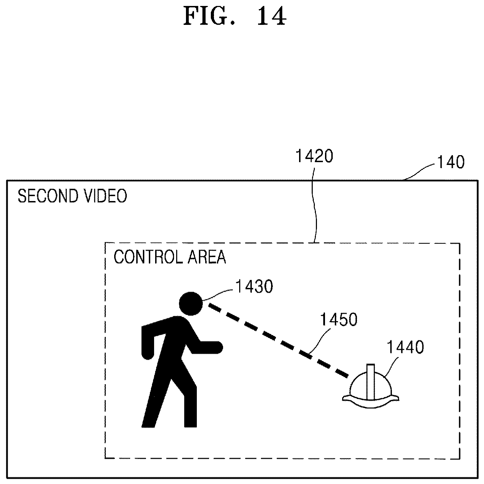

FIG. 14 is an example diagram illustrating a method of detecting an event of not wearing safety equipment, according to an embodiment.

Referring to FIG. 14, a person 1430 and safety equipment 1440 may be detected in a control area 1420 designated within a preprocessed second video 1410 by using an object detection algorithm.

A ship safety control device may calculate a distance 1450 between the person 1430 and the safety equipment 1440. The ship safety control device may determine that an event of not wearing safety equipment has occurred when the calculated distance 1450 exceeds a certain threshold value.

In addition, the ship safety control device may determine that an event of not wearing safety equipment has occurred when a time, for which the distance 1450 that has been calculated exceeds the certain threshold, is greater than a certain threshold value within a certain time period

For example, the ship safety control device may determine that a fall event has occurred when a time, for which the distance 1450 that has been calculated exceeds the certain threshold value, is 4 seconds or more within a time period of 20 seconds.

The ship safety control device may detect the occurrence of an event of not wearing safety equipment, based on a long-range object detection model and a short-range object detection model. For example, the ship safety control device may detect the person 1430 by using the long-range object detection model. The safety equipment 1440 that is relatively small compared to the person 1430 may not be detected by the long-range object detection model.

When the person 1430 is detected through the long-range object detection model, the ship safety control device may enlarge a region near the person 1430 that has been detected. The ship safety control device may detect the safety equipment 1440 by using the short-range object detection model in the enlarged region.

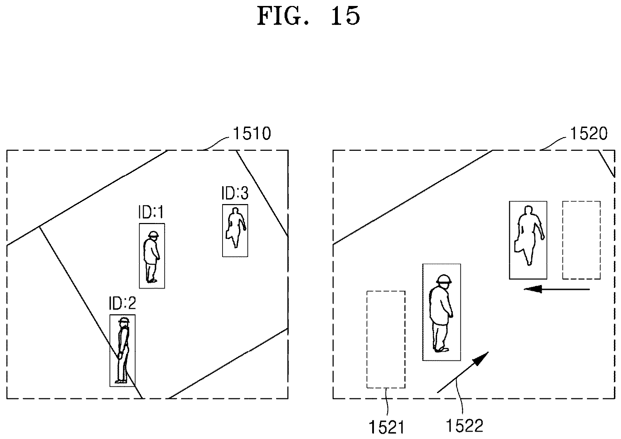

FIG. 15 is an example diagram illustrating a method of detecting an event involved in an increase in moving speed, according to an embodiment.

Referring to FIG. 15, an image 1510 shows a result of labeling objects detected in a work area. An image 1520 shows a result of calculating a moving distance and a moving direction of each detected object.

Referring to the image 1510, a ship safety control device may detect a person in a work area by using an object detection model. The ship safety control device may perform labeling of persons detected in the work area. The ship safety control device may issue an alarm and warn only a person who exceeds a certain moving speed through labeling.

Referring to the image 1520, the ship safety control device may calculate a relative moving speed, based on a bounding box 1521 for a person and a moving distance 1522. For example, the ship safety control device may correct distortion that occurs based on a field of view (FoV) of the imaging device.

The ship safety control device may determine that an event involved in an increase in moving speed has occurred when the moving speed of a person exceeds a certain threshold value.

The ship safety control device may determine that an event involved in an increase in moving speed has occurred when a time, for which the moving speed exceeds the certain threshold value, exceeds a certain threshold value within a certain time period.

For example, the ship safety control device may determine that an event involved in an increase in moving speed has occurred when a time, for which the moving speed exceeds the certain threshold value, is 3 seconds or more for 20 seconds.

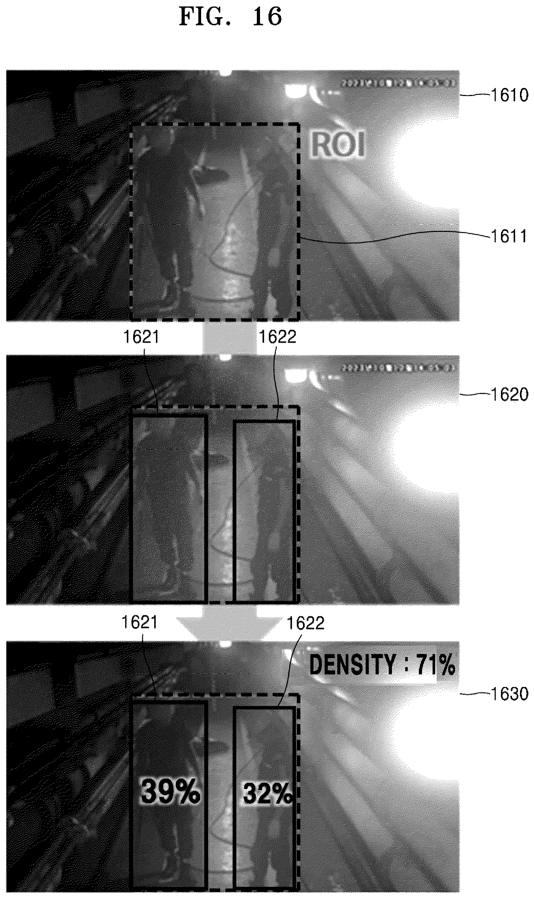

FIG. 16 is an example diagram illustrating a method of detecting an event involved in cluster occurrence, according to an embodiment.

Referring to FIG. 16, an image 1610 corresponds to an image of a shooting area in which a control area 1611 is designated. An image 1620 corresponds to an image of the shooting area in which bounding boxes 1621 and 1622 for respective objects detected in the control area 1611 are shown. An image 1630 corresponds to an image of the shooting area in which the ratio of the bounding boxes 1621 and 1622 to the control area 1611 is shown.

Referring to the image 1610, a ship safety control device may detect multiple objects in the control area 1611.

Referring to the image 1620, the ship safety control device may determine the bounding boxes 1621 and 1622 for the respective objects detected in the control area 1611. Here, each of the bounding boxes 1621 and 1622 means the minimum rectangle including an object.

Referring to the image 1630, the ship safety control device may calculate the ratio of each of the bounding boxes 1621 and 1622 to the control area 1611. For example, the bounding box 1621 may be calculated to occupy 39 % of the control area 1611, and the bounding box 1622 may be calculated to occupy 32 % of the control area 1611.

The ship safety control device may determine that an event involved in cluster occurrence has occurred when the ratio of all the bounding boxes 1621 and 1622 to the control area 1611 exceeds a certain threshold value.

The ship safety control device may determine that an event involved in cluster occurrence has occurred when a time, for which the ratio of all the bounding boxes 1621 and 1622 to the control area 1611 exceeds the certain threshold value, exceeds a certain threshold value within a certain time period.

For example, the ship safety control device may determine that an event involved in cluster occurrence has occurred when a time, for which the ratio of all bounding boxes to a control area exceeds the certain threshold value, is 4 seconds or more during 20 seconds.

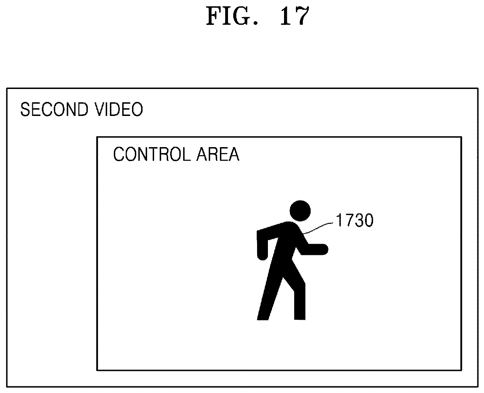

FIG. 17 is an example diagram illustrating a method of detecting an event involved in an intrusion into a danger area, according to an embodiment.

Referring to FIG. 17, a person 1730 may be detected in a control area 1720 designated within a preprocessed second video 1710 by using an object detection algorithm.

A ship safety control device may designate the control area 1720 as a danger area. The ship safety control device may determine that an event involved in an intrusion into a danger area has occurred when the person 1730 is detected in the control area 1720 designated as a danger area.

The ship safety control device may determine that an event involved in an intrusion into a danger area has occurred when a time, for which the person 1730 is detected in the control area 1720 designated as a danger area, is at least a certain threshold value within a certain time period.

For example, the ship safety control device may determine that an event involved in an intrusion into a danger area has occurred when a time, for which the person 1730 is detected in the control area 1720 designated as a danger area, is 3 seconds or more during a time period of 20 seconds.

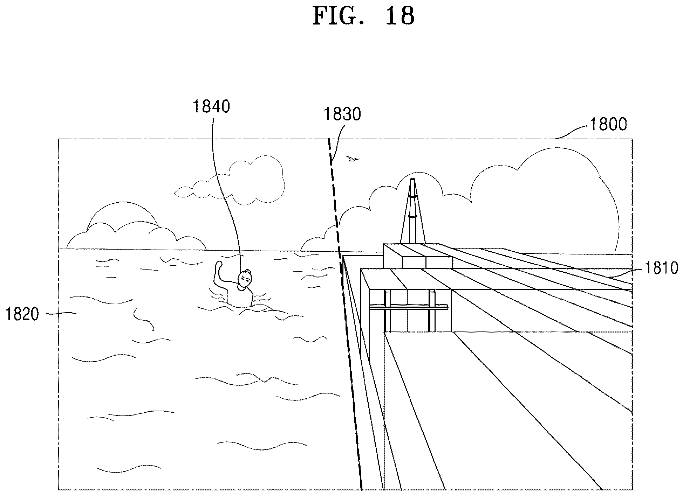

FIG. 18 is an example diagram illustrating a method for detecting an event of falling into the sea, according to an embodiment.

Referring to FIG. 18, a ship safety control device may divide an area in a second video 1800 into a sea area 1820 and a ship area 1810. For example, the ship safety control device may be divided into the sea area 1820 and the ship area 1810, based on an image classification technology.

The ship safety control device may generate a virtual line 1830 connecting pixels corresponding to a part at which the sea area 1820 and the ship area 1810 are connected.

The ship safety control device may determine whether a person 1840 moves from the ship area 1810 to the sea area 1820.

The ship safety control device may determine that an event of falling into the sea has occurred when a time, for which the person 1840 is detected in the sea area 1820 after the person 1840 moves from the ship area 1810 to the sea area 1820, exceeds a certain threshold value within a certain time period.

For example, the ship safety control device may determine that an event of falling into the sea has occurred when a time, for which the person 1840 is detected in the sea area 1820 after the person 1840 moves from the ship area 1810 to the sea area 1820, exceeds 4 seconds within 20 seconds.

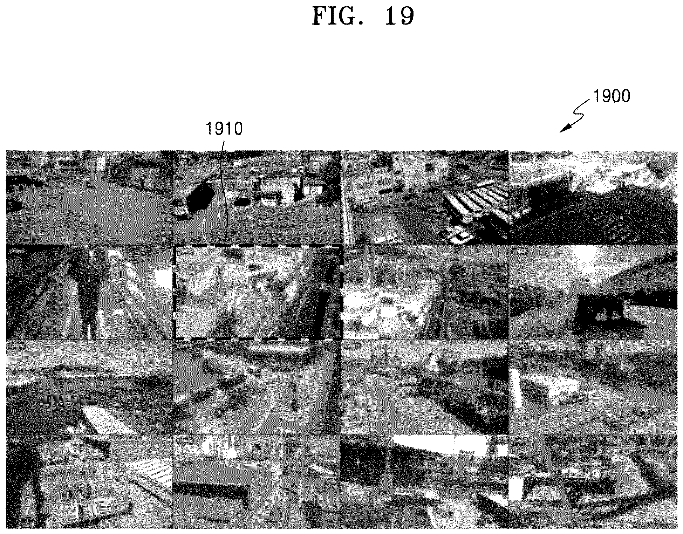

FIG. 19 is an example drawing illustrating a selective control method according to an embodiment.

Referring to FIG. 19, an image 1900 corresponds to a screen displaying all videos obtained by shooting a ship, a yard, and a shipyard.

The ship safety control device may provide a user with videos of all locations where imaging devices are installed. The ship safety control device may help a user easily recognize a location at which an event has occurred by highlighting an image 1910 of the location at which the event has occurred when the user is provided with the image 1910.

An embodiment of the present invention may be embodied as a computer program executed on a computer using various components The computer program may be recorded in a computer-readable medium. At this time, the computer-readable medium may include a magnetic medium such as a hard disk, floppy disks, or magnetic tape, an optical recording medium such as compact disc read-only memory (CD-ROM) or digital versatile disc (DVD), a magnetooptical medium such as a floptical disk, or a hardware device, such as ROM, random access memory (RAM), or flash memory, which is specifically configured to store and execute program instructions.

The computer program may be specially designed and configured for the present invention or may have been known and available to those skilled in the art in the field of computer software. Examples of computer programs may include machine codes created by a compiler and high-level language codes that may be executed on a computer using an interpreter.

According to an embodiment, a method according to various embodiments of the present disclosure may be provided as included in a computer program product. The computer program product may be traded between a seller and a buyer as a commodity. The computer program product may be distributed as a machine-readable storage medium (e.g., a CD-ROM) or may be distributed online (e.g., downloading or uploading) via an application store (e.g., Play Store TM) or directly between two user devices. In the case of online distribution, at least a portion of the computer program product may be temporarily stored or temporarily created in a machine-readable storage medium, such as memory of a manufacturer's server, an application store's server, or a proxy server.

The operations of the method described herein may be performed in any suitable order unless otherwise indicated herein or otherwise clearly contradicted by context. The present invention is not necessarily limited to the described order of the operations. The use of any or all examples or example language (e.g., etc.) provided herein is intended merely to elaborate the present invention and does not pose a limitation on the scope of the present invention unless otherwise claimed. Numerous modifications and adaptations will be readily apparent to one of ordinary skill in the art without departing from the spirit and scope of the appended claims or their equivalents.

Therefore, the spirit of the present invention should not be limited to the embodiments described above, and the scope of the appended claims and the scope of equivalents of the claims or the equivalently modified scope are all included in the spirit of the present invention.

## Claims

1. A ship safety control method comprising:
determining a sea condition in an area, in which a ship is located, based on a video feature of a first video of a ship situation;
preprocessing the first video based on the sea condition;
designating a control area in a second video generated through the preprocessing based on the second video; and
detecting at least one of an object and occurrence of an event within the control area.

2. The ship safety control method of claim 1, wherein
the video feature includes at least one of
an illuminance feature, an RGB feature, and a dark channel feature.

3. The ship safety control method of claim 2, wherein
the preprocessing includes
performing night preprocessing on the first video when a value of the illuminance feature exceeds a first threshold value;
performing rain preprocessing on the first video when a value of the RGB feature exceeds a second threshold value; and
performing sea-fog preprocessing on the first video when a value of the dark channel feature exceeds a third threshold value.

4. The ship safety control method of claim 2, wherein
the determining of the sea situation includes:
calculating a brightness value of each of RGB channels of the first video; determining a channel having a minimum value among brightness of the RGB channels;
calculating an average brightness value of pixels in the first video for the determined channel; and
determining the average brightness value as a dark channel feature value.

5. The ship safety control method of claim 2, wherein
the determining of the sea situation includes:
calculating a brightness value of each pixel included in a frame of the first video;
comparing the brightness value of each pixel in the frame with a brightness value of each pixel in an adjacent frame and calculating a variation in the brightness value of each pixel; and
determining, as a value of the RGB feature, a number of pixels for each of which the variation in the brightness value exceeds a certain threshold value.

6. The ship safety control method of claim 3, wherein
the first threshold value is set based on at least one of a background condition of the first video, an average brightness value of RGB channels of each frame in the first video, and a control group of images in which no sea fog is detected.

7. The ship safety control method of claim 2, wherein
the second threshold value is
set based on at least one of a background condition of the first video, an average brightness value of RGB channels of each frame in the first video, and a control group of images in which no rain is detected.

8. The ship safety control method of claim 1, wherein
the designating of the control area includes:
dividing the second video into a sea area and a ship area; and
designating at least one of the sea area and the ship area as the control area.

9. The ship safety control method of claim 1, wherein
the designating of the control area includes:
detecting whether there is a change in a shooting zone for the first video; and
maintaining and recognizing the control area, which has been designated, when the shooting zone for the first video has changed.

10. The ship safety control method of claim 1, wherein
the detecting of at least one of the object and the occurrence of an event includes
determining a bounding box for the object; and
recognizing the occurrence of an event, based on an aspect or a movement of the bounding box.

11. The ship safety control method of claim 10, wherein
the recognizing of the occurrence of an event includes
determining whether at least one of a ratio of a width and a height of the bounding box, a distance between a plurality of bounding boxes, a moving speed of the bounding box, and a ratio of the bounding box to the control area exceeds a certain threshold value.

12. A computer-readable recording medium having recorded thereon a program for causing a computer to execute the method of claim 1.

13. A computing device comprising:
at least one memory; and
at least one processor,
wherein the at least one processor is configured to
determine a sea condition in an area, in which a ship is located, based on a video feature of a first video of a ship situation,
preprocess the first video in a different manner according to the sea condition, and detect at least one of an object and occurrence of an event based on a second video generated through the preprocessing, and
the video feature includes
at least one of an illuminance feature, an RGB feature, and a dark channel feature.

14. The computing device of claim 13, wherein
the processor is further configured to
calculate a brightness value of each of RGB channels of the first video, determine a channel having a minimum value among brightness values of the RGB channels, determine, as a value of the dark channel feature, an average brightness value of pixels in the first video for the determined channel, and,
when the value of the dark channel feature exceeds a first threshold value, preprocess the first video such that a brightness value of at least one channel among the RGB channels of the second video tends to be very low compared to a brightness value of each of the other channels.

15. The computing device of claim 13, wherein
the processor is further configured to
calculate a brightness value of each pixel included in a frame of the first video, compare the brightness value of each pixel in the frame with a brightness value of each pixel in an adjacent frame, calculate a variation in the brightness value of each pixel,
determine, as the RGB feature, a number of pixels for each of which the variation in the brightness value exceeds a certain threshold value, and,
when a value of the RGB feature exceeds a second threshold value, perform rain preprocessing on the first video based on information obtained by inversely calculating color information of pixels, for which a variation in an average brightness value of RGB channels is relatively great, while a frame of the first video is being compressed and restored.
